# EUROPÄISCHE PATENTSCHRIFT

(11) **EP 4 147 298 B1**
(45) Veröffentlichungstag und Bekanntmachung des Hinweises auf die Patenterteilung: **01.01.2025**
(21) Anmeldenummer: 21730149.8
(22) Anmeldetag: 27.05.2021
(51) Int. Cl.: H01M 50/213, H01M 50/55

(54) **OBERSCHALENFREIES BATTERIEZELLENMODUL**
BATTERY CELL MODULE WITHOUT AN UPPER SHELL
MODULE DE CELLULE DE BATTERIE SANS COQUE SUPÉRIEURE

(30) Priorität: 02.06.2020 DE 102020114648
(43) Veröffentlichungstag der Anmeldung: 15.03.2023
(73) Patentinhaber: RWE Generation SE, 45141 Essen (DE)
(72) Erfinder: MARSCHEWSKI, Julian, 40489 Düsseldorf (DE)
(74) Vertreter: Schwenderling, Jens
(86) Internationale Anmeldenummer: PCT/EP2021/064211
(87) Internationale Veröffentlichungsnummer: WO 2021/244944

(56) Entgegenhaltungen:
- WO-A1-2017/220513
- DE-A1- 102008 034 878
- JP-A- H1 125 932
- US-A1- 2006 216 581
- US-A1- 2020 035 959
- US-B2- 8 197 962

## Beschreibung

Gegenstand der vorliegenden Erfindung ist ein Batteriezellenmodul zum Einsatz in mobilen oder stationären Anwendungen als Energiespeicher zur Speicherung elektrischer Energie.

Batteriezellenmodule werden zur Speicherung elektrischer Energie eingesetzt. Ihre Bedeutung nimmt im Zuge der verstärkt auftretenden Elektromobilität und durch die vermehrte Nutzung regenerativer Energien mit der Notwendigkeit, diskontinuierlich erzeugte elektrische Energie für die spätere Abgabe zu speichern, zu. Weiterhin ist es bekannt, mehrere Batteriezellen elektrisch und mechanisch zu Batteriezellenmodulen zusammenzufassen, beispielsweise aus der US 2014/178722 A1. Diese Druckschrift offenbart den Aufbau von Batteriezellenmodulen aus einer Oberschale und einer Unterschale und einer Vielzahl von Batteriezellen, die mit einem Längsende an der Oberschale und dem anderen Längsende an der Unterschale fixiert sind. Weiterhin sind Kühlleitungen offenbart, durch welches Kühlmedium zur Abfuhr der Abwärme der Batteriezellen beim Aufladen und Entladen abgeführt werden kann. Dies ist aufwändig und schränkt die geometrischen Lösungen zum Aufbau von Batteriezellenmodulen ein. Aus der WO 2019/206 409 A1 ist ein Batteriezellenmodul bekannt, bei dem die elektrische Kontaktierung der einzelnen Batteriezellen auf einer Seite der Batteriezellen erfolgt und bei dem zur Kühlung an Unterschale oder Oberschale Kühlelemente ausgebildet sind. Auch diese Lösung ist aufwändig zu realisieren.

Verschiedene Batteriemodule sind beispielsweise aus der WO 2017/220 513 A1, der US 2020/035 959 A1, der US 8,197,962 B2 und der US 2006/0216581 A1 bekannt. Die JP H11 25932 A beschreibt eine Batterie.

Hiervon ausgehend liegt der vorliegenden Erfindung die Aufgabe zugrunde, die aus dem Stand der Technik bekannten Probleme zumindest zum Teil zu überwinden.

Diese Aufgabe wird gelöst mit den Merkmalen des unabhängigen Anspruchs. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Das erfindungsgemäße Batteriezellenmodul, insbesondere zum Einsatz in einem Kraftfahrzeug und/oder in einem stationären Energiespeicher, umfasst eine Unterschale mit mindestens einer Aufnahme zur Verbindung mit einer Batteriezelle und mindestens eine zylindrische Batteriezelle mit einer Längsachse, einem ersten Längsende und einem zweiten Längsende, wobei das erste Längsende in einer Aufnahme der Unterschale fixiert ist, und zeichnet sich dadurch aus, dass das Batteriezellenmodul oberschalenfrei ist.

Unter dem Begriff "oberschalenfrei" wird verstanden, dass eine mechanische Fixierung der Batteriezellen zur Bildung des Batteriezellenmoduls ausschließlich in den Aufnahmen der Unterschale erfolgt und die elektrische Kontaktierung der einzelnen Batteriezelle ausschließlich in der jeweiligen Aufnahme stattfindet. Bevorzugt ist dabei eine Lösung, bei der ein erster Pol der Batteriezelle an einer Stirnseite des ersten Längsendes und ein zweiter Pol an einer Umfangsfläche des ersten Längsendes ausgebildet ist. Unter dem ersten Längsende werden bevorzugt die endständigen höchstens 20%, bevorzugt höchstens 15% der Länge der Batteriezelle verstanden. Das erste Längsende umfasst neben der entsprechenden Stirnseite der Batteriezelle auch einen Teil der Umfangsfläche der Batteriezelle. Bevorzugt wird das Batteriezellenmodul so verbaut, dass die Unterschale zum Boden ausgerichtet ist, also die Batteriezellen bezogen auf die Schwerkraft oberhalb der Unterschale liegen. Je nach geometrischer Situation ist es auch möglich und erfindungsgemäß, dass die Unterschale bezogen auf die Schwerkraft oberhalb oder seitlich der Batteriezellen ausgebildet ist.

Das entsprechende Batteriezellenmodul wird bevorzugt in mobilen Anwendungen wie insbesondere Kraftfahrzeugen, Schienenfahrzeugen, Wasserfahrzeugen und/oder Luftfahrzeugen eingesetzt. Eine weitere bevorzugte Anwendung ist als Energiespeicher in stationären Anwendungen. Insbesondere bei einem steigenden Anteil von erneuerbaren Energien, die in ein Stromnetz eingespeist werden, beispielsweise aus Fotovoltaik- oder Windenergieanlagen, besteht die Notwendigkeit, zeitweise Energie zu speichern, die in Zeiten eines Überangebots produziert wird und diese in Zeiten eines Unterangebots in das Stromnetz einzuspeichern.

Unter dem Begriff einer zylindrischen Batteriezelle wird eine Batteriezelle mit einer zylindrischen Geometrie verstanden, die in einer Ebene einen Querschnitt und eine Längsachse aufweist, die nicht in der Ebene liegt. Insbesondere muss die Längsachse nicht senkrecht zu der genannten Ebene ausgerichtet sein. Der Querschnitt weist bevorzugt Kreissymmetrie auf, jedoch sind auch andere Querschnitte, beispielsweise in Form einer Ellipse oder in Form eines Polygons möglich. Bevorzugt weist die zylindrische Batteriezelle die Form eines senkrechten Kreiszylinders auf. Unter dem Begriff Batteriezelle wird insbesondere eine wiederaufladbare, zylindrische Zelle zur reversiblen Speicherung und Abgabe elektrischer Energie verstanden. Die einzelnen Batteriezellen sind insbesondere Lithium-basiert, insbesondere sind sie Lithium-Ionen-Akkumulatoren. Die Fixierung zwischen dem ersten Längsende und der entsprechenden Aufnahme ist bevorzugt so ausgeführt, dass das Batteriezellenmodul die Testkriterien der Vereinten Nationen UN38.3 erfüllt. Dies gilt sowohl, wenn das Batteriezellenmodul geeignet und bestimmt für eine mobile als auch für eine stationäre Anwendung ist.

Durch die oberschalenfreie Ausgestaltung wird die Auslegung einer Kühlung für das Batteriezellenmodul vereinfacht, da eine wesentliche geometrische Einschränkung für Auslegung und Aufbau eines Kühlsystems entfällt. Gleichzeitig verringert sich der Bauraum, der für den Einbau eines Batteriezellenmoduls notwendig ist. Aufgrund des im Vergleich zu bekannten Systemen geringeren Gewichtes erhöht sich die spezifische Energiedichte des Batteriezellenmoduls bezogen auf die Masse des Batteriezellenmoduls. Das hier beschriebene Batteriezellenmodul hat weiterhin den Vorteil, dass es tolerant gegenüber Längendifferenzen der einzelnen Batteriezellen ist, die aufgrund der Toleranzen bei der Fertigung der Batteriezellen entstehen, da die einzelnen Batteriezellen lediglich in der Unterschale fixiert werden.

Bevorzugt wird das Batteriezellenmodul gekühlt, indem die einzelnen Batteriezellen von einem Kühlmedium wie insbesondere ein Gas, insbesondere Luft, oder einer Flüssigkeit, direkt, also ohne durch eine Leitung geführt zu werden, umströmt werden. Bevorzugt wird als Flüssigkeit eine dielektrische Flüssigkeit und/oder ein nicht-wässriges Wärmeübertragungsmedium eingesetzt. Insbesondere wird als Kühlmedium ein Öl, insbesondere ein Mineralöl, ein synthetisches Öl, ein Silikonöl, Fluorkohlenwasserstoffe wie insbesondere Perfluorkohlenwasserstoffe, Perfluorpolyether, Perfluoramine, Perfluorether, und Hydrofluorkohlenwasserstoffe wie insbesondere Hydrofluorether, Perfluorketone und Mischungen mindestens zweier dieser Stoffe eingesetzt.

Es ist vorteilhaft möglich, die Batteriezellen relativ zur Unterschale so zu verteilen, dass vorgegebene Rahmenbedingungen, beispielsweise im Hinblick auf einen Druckverlust einer Strömung von Kühlmedium durch das Batteriezellenmodul, erfüllt werden. Dies ermöglicht die Auslegung von Batteriezellenmodulen, die an bestimmte Kühlanforderungen angepasst sind. Die Verteilung der Batteriezellen im Batteriezellenmodul kann durch eine entsprechende Positionierung der Aufnahmen in der Unterschale und/oder durch die gezielte Belegung nur eines Teils der Aufnahmen erfolgen.

Jede einzelne Batteriezelle weist elektrische Verbindungsmittel auf, über die eine elektrische Anbindung der Batteriezelle erfolgt. Bevorzugt sind diese am ersten Längsende und/oder am Umfang, insbesondere im Bereich des ersten Längsendes, ausgebildet und wirken mit entsprechenden Verbindungsmitteln in der Aufnahme zusammen.

Bevorzugt ist eine Batteriezelle stoffschlüssig mit der entsprechenden Aufnahme verbunden. Die stoffschlüssige Verbindung kann insbesondere durch einen Klebevorgang und/oder einen Schweißvorgang und/oder einen Lötvorgang erzeugt werden. Durch die Festlegung der Art der stoffschlüssigen Verbindung, insbesondere angepasst an die Materialien der Unterschale, die bevorzugt aus duro- oder thermoplastischen Materialien, bevorzugt aus Acrylnitril-Butadien-Styrol-Copolymer (ABS), Polyamid (PA), Polybutylenterephthalat (PBT), Polycarbonat (PC), Polyethlyen (PE), Polyethylenterephthalat (PET), Polypropylen (PP), Polyphenylenether (PPE) und Polyphenylensulfid (PPS) oder aus Mischungen mindestens zwei dieser Materialien und/oder an der Außenhülle der Batteriezelle kann die Lösekraft der stoffschlüssigen Verbindung, die zu einem zumindest teilweisen Ablösen der Batteriezelle von der Aufnahme führt, genau definiert werden.

Bevorzugt ist eine Batteriezelle kraftschlüssig mit der entsprechenden Aufnahme verbunden. Eine kraftschlüssige Verbindung, beispielsweise eine reibschlüssige Verbindung zwischen dem ersten Längsende der Batteriezelle, insbesondere der Umfangsfläche des ersten Längsendes und der entsprechenden Aufnahme, ermöglicht eine einfache Montage des Batteriezellenmoduls. Insbesondere kann dies dadurch erreicht werden, dass die Abmessungen, insbesondere der Durchmesser bei einer zylindrischen Ausgestaltung der Batteriezelle, größer ist als die innere Abmessung, insbesondere der innere Durchmesser, der Aufnahme und die Aufnahme soweit elastisch ausgebildet ist, dass die Batteriezelle mit ihrem ersten Längsende in die Aufnahme zwecks Bildung einer kraftschlüssigen Verbindung eingeführt werden kann. Alternativ kann die entsprechende Aufnahme konisch ausgebildet sein. Durch die Ausgestaltung der Oberflächenbeschaffenheit und/oder eine Materialwahl des ersten Längsendes und der Aufnahme kann ein Reibungskoeffizient zwischen erstem Längsende und Aufnahme eingestellt werden, um einen definierten Kraftschluss bis zu einer vorgebbaren Lösekraft zu ermöglichen.

Bevorzugt ist eine Batteriezelle formschlüssig mit der entsprechenden Aufnahme verbunden. Dies kann insbesondere durch entsprechende Click- oder Rastverbindungen erfolgen, die im Wartungsfall oder nach Ablauf der Lebensdauer beim Recycling einfach wieder lösbar sind.

Bevorzugt weisen die Aufnahme erste Verbindungsmittel und die Batteriezelle zu den ersten Verbindungsmitteln korrespondierende zweite Verbindungsmittel auf. Die Verbindungsmittel sind bevorzugt so gestaltet, dass sie die Ausbildung einer kraft- und/oder formschlüssigen Verbindung ermöglichen. Alternativ oder zusätzlich kann durch die Verbindungsmittel eine stoffschlüssige Verbindung erleichtert werden, indem erste und zweite Verbindungsmittel beispielsweise als Klebeflächen dienen. Hierdurch kann die für die Ausbildung der stoffschlüssigen Verbindung zur Verfügung stehende Fläche vergrößert werden. Die hier genannten Verbindungsmittel können in vorteilhafter Weise auch zur Herstellung einer elektrischen Verbindung zwischen der entsprechenden Aufnahme und der entsprechenden Batteriezelle genutzt werden, um eine elektrische Kontaktierung zwischen Batteriezelle und Unterschale herzustellen.

Durch die Ausbildung lediglich einer kraft- und/oder formschlüssigen Verbindung durch die ersten und zweiten Verbindungsmittel kann eine lösbare Verbindung zwischen Aufnahme und Batteriezelle erreicht werden, sodass beispielsweise eine defekte Batteriezelle ausgetauscht oder grundsätzliche eine andere Konfiguration der Batteriezellen in dem Batteriezellenmodul erreicht werden kann. Bevorzugt sind erste und zweite Verbindungsmittel so ausgebildet, dass eine Rastverbindung zwischen erstem Verbindungsmittel und zweitem Verbindungsmittel entsteht.

Bevorzugt sind die zweiten Verbindungsmittel in einem Verbindungsbereich der Batteriezelle ausgebildet, der sich über höchstens 20% der Länge der Batteriezelle erstreckt und an dem ersten Längsende ausgebildet ist.

Bevorzugt umfasst mindestens eines der ersten Verbindungsmittel und der zweiten Verbindungsmittel mindestens eines der folgenden Elemente:
▪ einen ersten Vorsprung, der die Batteriezelle oder die Aufnahme über den gesamten Umfang bezogen auf die Längsachse umgibt;
▪ mindestens einen zweiten Vorsprung, der an einer Umfangsposition der Batteriezelle oder der Aufnahme ausgebildet ist;
▪ mindestens eine erste Nut, die die Batteriezelle oder die Aufnahme über den gesamten Umfang bezogen auf die Längsachse umgibt; und
▪ mindestens eine zweite Nut, die an einer Umfangsposition der Batteriezelle oder der Aufnahme ausgebildet ist.

Bevorzugt ist in diesem Zusammenhang, dass die zweiten Verbindungsmittel pro Batteriezelle mehrere zweite Vorsprünge umfassen, die über den Umfang der Batteriezelle verteilt sind. Bevorzugt sind also erste und zweite Verbindungsmittel als Vorsprünge und korrespondierende Nuten ausgebildet. Bevorzugt sind dabei Varianten, bei denen Batteriezelle oder Aufnahme ersten Vorsprung oder eine erste Nut aufweisen, die sich jeweils über den gesamten Umfang, bezogen auf die Längsachse, erstrecken. Diese Verbindungen sind gut gegen ein unbeabsichtigtes Lösen der Verbindung geschützt. Alternativ sind Ausgestaltungen, bei denen Batteriezelle oder Aufnahme mindestens eine zweite Nut oder mindestens einen zweiten Vorsprung aufweisen, der sich nicht über den gesamten Umfang, bezogen auf die Längsachse, erstreckt, sondern nur über einen Teil des Umfangs und der an einer bestimmten Umfangsposition ausgebildet ist. Bevorzugt sind mehrere zweite Vorsprünge oder zweite Nuten ausgebildet, die insbesondere gleichmäßig über den Umfang verteilt sind. Diese Verbindungen sind einfach herstell- und einfach zerstörungsfrei wieder lösbar.

Die Batteriezelle umfasst mindestens ein Kühlelement, welches sich vorzugsweise über mindestens 50% der Länge der Batteriezelle in Längsrichtung erstreckt und welches als Vorsprung ausgebildet ist. Durch die Ausbildung mindestens eines Kühlelements wird der Wärmeübergang zwischen der einzelnen Batteriezelle und dem Kühlmedium verbessert. Insbesondere weisen alle Batteriezellen des Batteriezellenmoduls mindestens ein Kühlelement in der Form einer Kühlrippe auf. Bevorzugt unterscheiden sich die Kühlelemente verschiedener Batteriezellen. Bevorzugt sind Anzahl, Form und/oder Material des oder der Kühlelemente der einzelnen Batteriezellen an den Kühlbedarf der jeweiligen Batteriezelle angepasst, insbesondere auch an den Volumenstrom an Kühlmedium, der die entsprechende Batteriezelle an- bzw. umströmt. Bevorzugt sind die Kühlelemente aus dem gleichen Material wie die Batteriezellhülle oder einem Leichtmetall, insbesondere einer Aluminiumlegierung, Aluminium oder Stahl bzw. einer Stahllegierung ausgebildet.

Bevorzugt weist das Batteriezellenmodul eine Unterschale mit einer ersten Anzahl von Aufnahmen und eine zweite Anzahl von Batteriezellen auf und der Quotient aus zweiter Anzahl zur ersten Anzahl kleiner als eins ist. Dies erlaubt die Ausgestaltung eines Baukastensystems, bei dem durch das gezielte Belegen einzelner Aufnahmen das Kühlverhalten des Batteriezellenmoduls. im Hinblick insbesondere auf die notwendige Kühlmediumströmung und deren Druckverlust, an die Anforderungen an das Batteriezellenmodul angepasst werden kann. Weiterhin kann durch das Baukastensystem das Batteriezellenmodul an die elektrischen Anforderungen wie insbesondere Nennspannung und Kapazität des Batteriezellenmodules angepasst werden, so dass mit gleichen Bauteilen unterschiedliche Batteriezellenmodule ausgebildet werden können. Alternativ ist es auch möglich, das Batteriezellenmodul so auszubilden, dass dieser Quotient eins ist, jedoch die Position der einzelnen Aufnahmen im Hinblick auf die notwendige Kühlmediumströmung und deren Druckverlust an die Anforderungen an das Batteriezellenmodul angepasst wird.

Bevorzugt ist die Unterschale mehrteilig so aus mindestens einem ersten Schalenbauteil und einem zweiten Schalenbauteil ausgebildet, dass erstes Schalenbauteil und zweites Schalenbauteil bei der Montage eine kraftschlüssige Verbindung zwischen der mindestens einen Batteriezelle und der mindestens einen Aufnahme ausbilden. Alternativ oder zusätzlich ist bevorzugt die Unterschale mehrteilig so aus mindestens einem ersten Schalenbauteil und einem zweiten Schalenbauteil ausgebildet, dass erstes Schalenbauteil und zweites Schalenbauteil bei der Montage eine formschlüssige Verbindung zwischen der mindestens einen Batteriezelle und der mindestens einen Aufnahme ausbilden. Insbesondere ist es bevorzugt, dass die ersten Verbindungsmittel aus dem ersten Schalenbauteil und dem zweiten Schalenbauteil gebildet werden. Bevorzugt bewirken erstes Schalenbauteil und zweites Schalenbauteil bei der Montage eine kraft- und formschlüssige Verbindung zwischen der mindestens einen Aufnahme und dem ersten Längsende, bevorzugt einem zweiten Verbindungsmittel der Batteriezelle.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen schematisch:
Fig. 1: ein Beispiel eines als bekannt angenommenen Batteriezellenmoduls im Querschnitt;
Fig. 2: ein erstes Beispiel eines Batteriezellenmoduls im Querschnitt;
Fig.3: ein zweites Beispiel eines Batteriezellenmoduls im Querschnitt;
Fig. 4-8: Beispiele von Batteriezellen, jeweils im Längsschnitt (oben) und im Querschnitt (unten);
Fig. 9-10: zwei Beispiele der Verteilung der Batteriezellen in einem Batteriezellenmodul im Querschnitt;
Fig. 11 ein Detail des ersten Beispiel eines Batteriezellenmoduls im Schnitt; und
Fig. 12 ein Detail des zweiten Beispiel eines Batteriezellenmoduls im Schnitt.

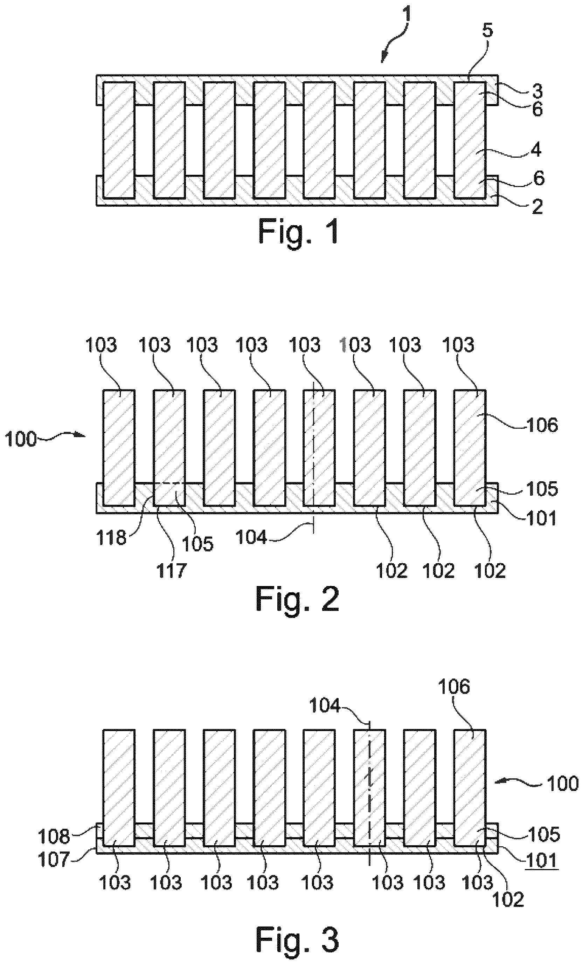

Fig. 1 zeigt schematisch ein als bekannt angenommenes Batteriezellenmodul 1. Dieses umfasst eine Unterschale 2, eine Oberschale 3 und eine Mehrzahl von Batteriezellen 4. Die Unterschale 2 und die Oberschale 3 weisen jeweils eine Mehrzahl von Aufnahmen 5 auf, mit der jeweils ein Längsende 6 einer Batteriezelle 4 verbunden ist. Die Bezugszeichen 4 bis 6 sind der Übersichtlichkeit halber nur teilweise eingezeichnet.

Fig. 2 zeigt im Unterschied dazu ein Batteriezellenmodul 100 nach der vorliegenden Erfindung. Das Batteriezellenmodul 100 umfasst eine Unterschale 101 mit einer Vielzahl von Aufnahmen 102 für Batteriezellen 103. Jede Batteriezelle 103 weist in diesem Beispiel eine zylindrische Geometrie auf. Jede Batteriezelle 103 weist eine Längsachse 104 und, in Bezug auf diese Längsachse 104, ein erstes Längsende 105 und ein zweites Längsende 106 auf. Auch hier sind der Übersichtlichkeit halber nicht alle Bezugszeichen eingezeichnet. Im Unterschied zum als bekannt angenommenen Beispiel eines Batteriezellenmoduls 1 aus Fig. 1 ist das Batteriezellenmodul 100 oberschalenfrei, weist also keine Oberschale auf. Jede Batteriezelle 103 ist mit seinem jeweiligen ersten Längsende 105 in einer Aufnahme 102 der Unterschale 101 durch Kleben stoffschlüssig fixiert. Wie an einer Stelle in Fig. 2 beispielhaft gezeigt umfasst das erste Längsende 105 eine entsprechende Stirnseite 117 der Batteriezelle 103 und eine entsprechende Umfangsfläche 118. Das erste Längsende 105 ist als der Bereich definiert, der in der Aufnahme 102 positioniert ist.

Fig. 3 zeigt ein zweites Beispiel eines Batteriezellenmoduls 100. Es wird auf die Beschreibung des ersten Beispiels in Fig. 2 verwiesen, hier werden nur die Unterschiede zwischen dem ersten Beispiel und dem zweiten Beispiel aufgezeigt. Im Batteriezellenmodul 100 nach dem zweiten Beispiel ist die Unterschale 101 mehrteilig aus einem ersten Schalenbauteil 107 und einem zweiten Schalenbauteil 108 ausgebildet. Die Aufnahmen 102 sind dabei im Zusammenwirken des ersten Schalenbauteils 107 und des zweiten Schalenbauteils 108 gebildet. Das erste Schalenbauteil 107 und das zweite Schalenbauteil 108 sind dabei so ausgebildet, dass bei der Montage der Batteriezellen 103 in den Aufnahmen 102 eine kraftschlüssige Verbindung zwischen den Aufnahmen 102 und den ersten Längsenden 105 der Batteriezellen 103 ausgebildet wird.

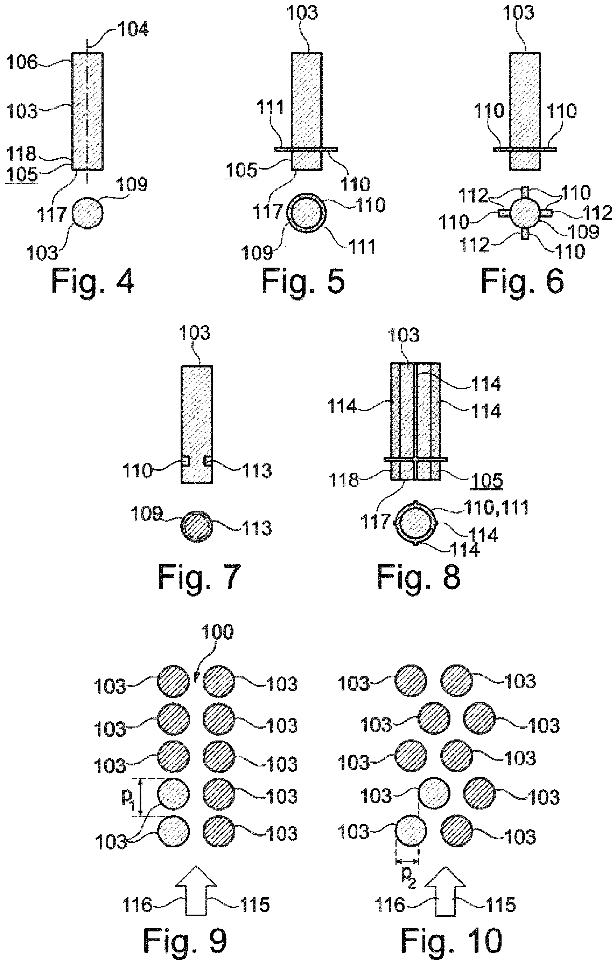

Die Figuren 4 bis 8 zeigen Beispiele für Batteriezellen 103. Fig. 4 zeigt ein erstes Beispiel einer Batteriezelle 103 im Längsschnitt (oben) und im Querschnitt (unten). Die Batteriezelle 103 weist eine zylindrische Geometrie mit der Längsachse 104 auf. Mit dem ersten Längsende 105 mit Stirnseite 117 und Umfangsfläche 118 wird die Batteriezelle 103 in einer Aufnahme 102 fixiert wie oben dargelegt. Der Querschnitt der Batteriezelle 103 ist rund mit einem Umfang 109, bezogen auf die Längsachse 104. Die elektrische Verbindung erfolgt in diesem wie in allen folgenden Beispielen über elektrische Verbindungselemente (nicht gezeigt), die am ersten Längsende 105 ausgebildet sind und die mit ebenfalls nicht gezeigten elektrischen Verbindungselementen in den Aufnahmen 102 zusammenwirken.

Fig. 5 zeigt ein zweites Beispiel einer Batteriezelle 103, Fig. 6 ein drittes Beispiel einer Batteriezelle 103, Fig. 6 ein viertes Beispiel einer Batteriezelle 103. Die Batteriezellen 103 in diesen Beispielen weisen alle zweite Verbindungsmittel 110 auf. Im zweiten Beispiel der Batteriezelle 104 (Fig. 5) ist das zweite Verbindungsmittel 110 als ein erster Vorsprung 111 ausgebildet, der sich über den gesamten Umfang 109 der Batteriezelle 103 erstreckt. Fig. 6 zeigt das dritte Beispiel, hier sind als zweite Verbindungsmittel 110 vier zweite Vorsprünge 112 ausgebildet, die über den Umfang 109 der Batteriezelle 103 verteilt sind. Diese können insbesondere mit einem einteiligen Aufbau der Unterschale 101 kombiniert werden, da die Batteriezelle 103 mit den zweiten Vorsprüngen 112 auf einfache Weise in die Aufnahmen 102 eingerastet werden kann. Bevorzugt sind die zweiten Verbindungsmittel 110 beziehungsweise die ersten Vorsprünge 111 und die zweiten Vorsprünge 112 aus einem Material mit einer Elastizität ausgebildet, welches das Einrasten ermöglicht. Als erste Verbindungsmittel sind entsprechende Nuten in den Aufnahmen 102 ausgebildet, die mit den zweiten Verbindungsmittel 110 korrespondieren. Hierbei können erste Nuten ausgebildet sein, die sich über den gesamten Umfang der Aufnahme 102 erstrecken oder zweite Nuten, die sich nur über einen Teilbereich des Umfangs der Aufnahme 102 erstrecken.

Fig. 7 zeigt das vierte Beispiel einer Batteriezelle 103, bei der als zweite Verbindungsmittel 110 zweite Nuten 113 ausgebildet sind. Die zweiten Nuten 113 erstrecken sich jeweils nur über einen Teil des Umfangs 109 der Batteriezelle 103. Diese korrespondieren mit entsprechenden zweiten Vorsprüngen der Aufnahme 102.

Fig. 8 zeigt ein fünftes Beispiel einer Batteriezelle 103. Diese weist neben einem ersten Vorsprung 111 als zweites Verbindungsmittel 110 vier Kühlelemente 114 auf. Diese stellen Vorsprünge dar, die sich in diesem Beispiel über die gesamte Länge der Batteriezelle 103 erstrecken. Die Kühlelemente 114 verbessern die Wärmeableitung aus der Batteriezelle 103. Da sich die Kühlelemente 114 auch über das erste Längsende 105 der Batteriezelle 103 erstrecken, muss die entsprechende Aufnahme 102 entsprechend angepasst werden. Bei allen fünf Beispielen sind die zweiten Verbindungsmittel 110 in einem Verbindungsbereich ausgebildet, der sich auf weniger als 20% der Länge der Batteriezelle 103 erstreckt und am ersten Längsende 105 ausgebildet ist. Im Gegensatz dazu erstrecken sich in diesem fünften Beispiel die Kühlelemente 114 über die gesamte Länge der Batteriezelle 103. Es ist aber auch möglich, dass nur ein Teilbereich der Länge der Batteriezelle 102 versehen wird und insbesondere nur ein Teilbereich, der nicht in die Aufnahme 102 eingreift.

Fig. 9 und 10 zeigen jeweils ein Beispiel eines Batteriemoduls 100 im Längsschnitt, die sich durch die räumliche Verteilung der Aufnahmen 102 bzw. der Batteriezellen 103 unterscheiden. In beiden Fällen wird das Batteriemodul 100 von einem Kühlmedium 115 ange- und durchströmt, welches beispielsweise eine erzwungene Fluidströmung, beispielsweise eine Gasströmung, insbesondere eine Luftströmung, oder eine Flüssigkeitsströmung, insbesondere eine Strömung einer dielektrischen Flüssigkeit, darstellen kann. Das Kühlmedium 115 strömt dabei in einer Strömungsrichtung 116 in das Batteriezellenmodul 100 ein. Durch die Wechselwirkung mit den Batteriezellen 102 ergeben sich lokale Strömungsverhältnisse, die sich durch einen Druckverlust der Strömung kennzeichnen lassen und die den Wärmeübergang zwischen Batteriezelle 102 und Kühlmedium 115 mitbestimmen. Durch unterschiedliche Anordnungen der Batteriezellen 102 lassen sich unterschiedliche Strömungsverhältnisse und damit unterschiedliche Kühleffizienzen einstellen. Dadurch kann die Kühleffizienz an den Einsatz des Batteriemoduls 100 (z. B. mobile oder statische Anwendungen, gleichmäßige Abgabe von elektrischer Energie oder diskontinuierliche Abgabe mit Peaks) angepasst werden. Fig. 9 und 10 zeigen beispielhaft einen ersten Abstand p1, der ein Maß für den Abstand zweier benachbarter Batteriezellen 102 in Strömungsrichtung 116 darstellt und einen zweiten Abstand p2, der ein Maß für den anströmbaren Querschnitt quer zur Strömungsrichtung 116 darstellt. Erster Abstand p1 und zweiter Abstand p2 können bevorzugt im Rahmen einer Modellierung der Kühlmittelströmung 115 eingesetzt werden.

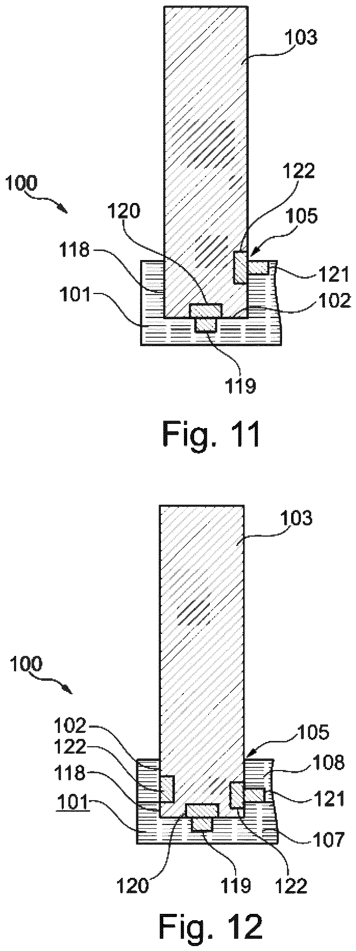

Fig. 11 zeigt ein Detail des ersten Beispiels eines Batteriezellenmoduls 100. Es wird auf die obige Beschreibung insbesondere zu Fig. 2 Bezug genommen, um Wiederholungen zu vermeiden. Das Detail zeigt eine Batteriezelle 103 in einer Aufnahme 102 der Unterschale 101. Die Aufnahme 102 weist einen ersten elektrischen Kontakt 119 auf, der mit einem ersten Pol 120 der Batteriezelle 103 in elektrischem Kontakt steht. Der erste Pol 120 ist bevorzugt der "+"-Pol der Batteriezelle 103. Bevorzugt ist der erste Pol 120 zentral und symmetrisch zur Längsachse 104 der Batteriezelle 103 ausgebildet. Die Aufnahme 102 weist weiterhin einen zweiten elektrischen Kontakt 121 auf, der einen zweiten Pol 122 der Batteriezelle 103 kontaktiert. In diesem Beispiel ist der zweite Pol 122, bevorzugt der "-"-Pοl der Batteriezelle 103, an der Umfangsfläche 118 der Batteriezelle 103. Der zweite Pol 122 ist in einem Teilbereich der Umfangsfläche 118 des ersten Längsendes 105 ausgebildet. Alternativ ist es auch möglich, dass der zweite Pol 122 rotationssymmetrisch zur Längsachse 104 ausgebildet und einen Teil der Umfangsfläche 118 bildet, der in diesem Teilbereich über den vollständigen Umfang der Batteriezelle 103 ausgebildet ist.

Fig. 12 zeigt ein Detail des zweiten Beispiels eines Batteriezellenmoduls 100. Es wird auf die obige Beschreibung insbesondere zu Fig. 3 und zu Fig. 11 Bezug genommen, um Wiederholungen zu vermeiden. Im zweiten Beispiel ist der zweite Pol 122 rotationssymmetrisch zur Längsachse 104 ausgebildet. Dies erleichtert die Montage der Batteriezelle 103 in der Aufnahme 102. Alternativ kann auch in diesem Beispiel eine Konfiguration des zweiten Pols 122 wie in Fig. 11 gewählt werden.

Das Batteriezellenmodul 100 ist oberschalenfrei. Batteriezellen 103 sind in Aufnahmen 102 einer Unterschale 101 aufgenommen und mit einem ersten Längsende 105 in dieser befestigt. Die Fixierung erfolgt dabei beispielsweise kraft- und/oder formschlüssig. Durch den oberschalenfreien Aufbau kann das Gewicht des Batteriezellenmoduls 100 reduziert werden, wodurch die spezifische Leistungsdichte steigt. Gleichzeitig ist der Aufbau unabhängig von Längendifferenzen der einzelnen Batteriezellen.

### Bezugszeichenliste

- 1: Batteriezellenmodul
- 2: Unterschale
- 3: Oberschale
- 4: Batteriezelle
- 5: Aufnahme
- 6: Längsende
- 100: Batteriezellenmodul
- 101: Unterschale
- 102: Aufnahme
- 103: Batteriezelle
- 104: Längsachse
- 105: erstes Längsende
- 106: zweites Längsende
- 107: erstes Schalenteil
- 108: zweites Schalenteil
- 109: Umfang
- 110: zweites Verbindungsmittel
- 111: erster Vorsprung
- 112: zweiter Vorsprung
- 113: zweite Nut
- 114: Kühlelement
- 115: Kühlmedium
- 116: Strömungsrichtung
- 117: Stirnseite
- 118: Umfangsfläche
- 119: erster elektrischer Kontakt
- 120: erster Pol
- 121: zweiter elektrischer Kontakt
- 122: zweiter Pol
- p1: erster Abstand
- p2: zweiter Abstand

## Patentansprüche

1. Batteriezellenmodul (100), insbesondere zum Einsatz in einem Kraftfahrzeug und/oder in einem stationären Energiespeicher, umfassend
eine Unterschale (101) mit mindestens einer Aufnahme (102) zur Verbindung mit einer Batteriezelle (103) und
mindestens eine zylindrische Batteriezelle (103) mit einer Längsachse (104), einem ersten Längsende (105) und einem zweiten Längsende (106), wobei das erste Längsende (105) in einer Aufnahme (102) der Unterschale (101) fixiert ist, und wobei das Batteriezellenmodul (100) oberschalenfrei ist, **dadurch gekennzeichnet, dass** die Batteriezelle (103) mindestens ein Kühlelement (114) umfasst, welches als sich entlang der Längsachse (104) erstreckende Kühlrippe ausgebildet ist.

2. Batteriezellenmodul (100) nach Anspruch 1, bei dem eine Batteriezelle (103) stoffschlüssig mit der entsprechenden Aufnahme (102) verbunden ist.

3. Batteriezellenmodul (100) nach einem der vorhergehenden Ansprüche, bei dem eine Batteriezelle (103) kraftschlüssig mit der entsprechenden Aufnahme (102) verbunden ist.

4. Batteriezellenmodul (100) nach einem der vorhergehenden Ansprüche, bei dem eine Batteriezelle (103) formschlüssig mit der entsprechenden Aufnahme (102) verbunden ist.

5. Batteriezellenmodul (100) nach einem der vorhergehenden Ansprüche, bei dem die Aufnahme (102) erste Verbindungsmittel und die Batteriezelle (103) zu den ersten Verbindungsmitteln korrespondierende zweite Verbindungsmittel (110) aufweisen.

6. Batteriezellenmodul (100) nach Anspruch 5, bei dem mindestens eines der ersten Verbindungsmittel und der zweiten Verbindungsmittel (110) mindestens eines der folgenden Elemente umfasst:
einen ersten Vorsprung (111), der die Batteriezelle (103) oder die Aufnahme (102) über den gesamten Umfang (109) bezogen auf die Längsachse (104) umgibt;
mindestens einen zweiten Vorsprung (112), der an einer Umfangsposition der Batteriezelle (103) oder der Aufnahme (102) ausgebildet ist;
mindestens eine erste Nut, die die Batteriezelle (103) oder die Aufnahme (102) über den gesamten Umfang (109) bezogen auf die Längsachse (104) umgibt; und
mindestens eine zweite Nut (113), die an einer Umfangsposition der Batteriezelle (103) oder der Aufnahme (102) ausgebildet ist.

7. Batteriezellenmodul (100) nach Anspruch 6, bei dem die zweiten Verbindungsmittel (110) pro Batteriezelle (103) mehrere zweite Vorsprünge (112) umfassen, die über den Umfang (109) der Batteriezelle (103) verteilt sind.

8. Batteriezellenmodul (100) nach einem der vorhergehenden Ansprüche, bei dem sich das Kühlelement (114) über mindestens 50% der Länge der Batteriezelle (103) in Längsrichtung (104) erstreckt.

9. Batteriezellenmodul (100) nach einem der vorhergehenden Ansprüche, bei dem das Batteriezellenmodul (100) eine Unterschale (101) mit einer ersten Anzahl von Aufnahmen (102) und eine zweite Anzahl von Batteriezellen (103) aufweist und der Quotient aus zweiter Anzahl zur ersten Anzahl kleiner als eins ist.

10. Batteriezellenmodul (100) nach einem der vorhergehenden Ansprüche, bei dem die Unterschale (101) mehrteilig so aus mindestens einem ersten Schalenbauteil (107) und einem zweiten Schalenbauteil (108) ausgebildet ist, dass erstes Schalenbauteil (107) und zweites Schalenbauteil (108) bei der Montage eine kraftschlüssige und/oder formschlüssige Verbindung zwischen der mindestens einen Batteriezelle (103) und der mindestens einen Aufnahme (102) ausbilden.

## Claims

1. Battery cell module (100), in particular for use in a motor vehicle and/or in a stationary energy store, comprising a lower shell (101) with at least one receptacle (102) for connection to a battery cell (103) and at least one cylindrical battery cell (103) with a longitudinal axis (104), a first longitudinal end (105) and a second longitudinal end (106), wherein the first longitudinal end (105) is fixed in a receptacle (102) of the lower shell (101), and wherein the battery cell module (100) is free of an upper shell, **characterized in that** the battery cell (103) comprises at least one cooling element (114), which is in the form of a cooling fin extending along the longitudinal axis (104).

2. Battery cell module (100) according to Claim 1, in which a battery cell (103) is connected in a materially bonded manner to the corresponding receptacle (102).

3. Battery cell module (100) according to either of the preceding claims, in which a battery cell (103) is connected in a force-fitting manner to the corresponding receptacle (102).

4. Battery cell module (100) according to any of the preceding claims, in which a battery cell (103) is connected in an interlocking manner to the corresponding receptacle (102).

5. Battery cell module (100) according to any of the preceding claims, in which the receptacle (102) has first connecting means and the battery cell (103) has second connecting means (110) which correspond to the first connecting means (110).

6. Battery cell module (100) according to Claim 5, in which at least one from amongst the first connecting means and the second connecting means (110) comprises at least one of the following elements:
a first projection (111), which surrounds the battery cell (103) or the receptacle (102) over the entire circumference (109) with respect to the longitudinal axis (104) ;
at least a second projection (112), which is formed in a circumferential position on the battery cell (103) or the receptacle (102);
at least a first groove, which surrounds the battery cell (103) or the receptacle (102) over the entire circumference (109) with respect to the longitudinal axis (104); and
at least a second groove (113), which is formed in a circumferential position on the battery cell (103) or the receptacle (102).

7. Battery cell module (100) according to Claim 6, in which the second connecting means (110) comprise a plurality of second projections (112) for each battery cell (103), the plurality of second projections being distributed over the circumference (109) of the battery cell (103).

8. Battery cell module (100) according to any of the preceding claims, in which the cooling element (114) extends over at least 50% of the length of the battery cell (103) in the longitudinal direction (104).

9. Battery cell module (100) according to any of the preceding claims, in which the battery cell module (100) has a lower shell (101) with a first number of receptacles (102) and a second number of battery cells (103) and the quotient of the second number to the first number is less than one.

10. Battery cell module (100) according to any of the preceding claims, in which the lower shell (101) is formed in a multiple-parts manner from at least a first shell component (107) and a second shell component (108) such that the first shell component (107) and the second shell component (18) form a force-fitting and/or interlocking connection between the at least one battery cell (103) and the at least one receptacle (102) during assembly.

## Revendications

1. Module de cellule de batterie (100), en particulier pour la mise en œuvre dans un véhicule automobile et/ou dans un accumulateur d'énergie stationnaire, comprenant
une coque inférieure (101) pourvue d'un logement (102) destiné à être relié à une cellule de batterie (103), et
au moins une cellule de batterie cylindrique (103) ayant un axe longitudinal (104), une première extrémité longitudinale (105) et une deuxième extrémité longitudinale (106), dans lequel la première extrémité longitudinale (105) est fixée dans un logement (102) de la coque inférieure (101), et dans lequel le module de cellule de batterie (100) est sans coque supérieure,
**caractérisé en ce que** la cellule de batterie (103) comprend au moins un élément de refroidissement (114) qui est réalisé sous la forme d'une ailette de refroidissement s'étendant le long de l'axe longitudinal (104).

2. Module de cellule de batterie (100) selon la revendication 1, dans lequel une cellule de batterie (103) est reliée par liaison de matière au logement (102) correspondant.

3. Module de cellule de batterie (100) selon l'une quelconque des revendications précédentes, dans lequel une cellule de batterie (103) est reliée par adhérence au logement (102) correspondant.

4. Module de cellule de batterie (100) selon l'une quelconque des revendications précédentes, dans lequel une cellule de batterie (103) est reliée par complémentarité de forme au logement (102) correspondant.

5. Module de cellule de batterie (100) selon l'une quelconque des revendications précédentes, dans lequel le logement (102) présente des premiers moyens de liaison, et la cellule de batterie (103) présente des deuxièmes moyens de liaison (110) correspondant aux premiers moyens de liaison.

6. Module de cellule de batterie (100) selon la revendication 5, dans lequel au moins l'un des premiers moyens de liaison et des deuxièmes moyens de liaison (110) comprend au moins l'un des éléments suivants :
une première saillie (111) qui entoure la cellule de batterie (103) ou le logement (102) sur toute la circonférence (109) par rapport à l'axe longitudinal (104) ;
au moins une deuxième saillie (112) qui est réalisée dans une position circonférentielle de la cellule de batterie (103) ou du logement (102) ;
au moins une première rainure qui entoure la cellule de batterie (103) ou le logement (102) sur toute la circonférence (109) par rapport à l'axe longitudinal (104) ; et
au moins une deuxième rainure (113) qui est réalisée dans une position circonférentielle de la cellule de batterie (103) ou du logement (102).

7. Module de cellule de batterie (100) selon la revendication 6, dans lequel les deuxièmes moyens de liaison (110) comprennent pour chaque cellule de batterie (103) plusieurs deuxièmes saillies (112) qui sont réparties sur la circonférence (109) de la cellule de batterie (103).

8. Module de cellule de batterie (100) selon l'une quelconque des revendications précédentes, dans lequel l'élément de refroidissement (114) s'étend sur au moins 50 % de la longueur de la cellule de batterie (103) dans la direction longitudinale (104).

9. Module de cellule de batterie (100) selon l'une quelconque des revendications précédentes, dans lequel le module de cellule de batterie (100) présente une coque inférieure (101) ayant un premier nombre de logements (102) et un deuxième nombre de cellules de batterie (103), et le quotient du deuxième nombre et du premier nombre est inférieur à un.

10. Module de cellule de batterie (100) selon l'une quelconque des revendications précédentes, dans lequel la coque inférieure (101) est réalisée en plusieurs parties à partir au moins d'un premier composant de coque (107) et d'un deuxième composant de coque (108) de telle sorte que le premier composant de coque (107) et le deuxième composant de coque (108) réalisent lors du montage une liaison par adhérence et/ou par complémentarité de forme entre ladite au moins une cellule de batterie (103) et ledit au moins un logement (102) .
